**Europäisches Patentamt**

**European Patent Office**

**Office européen des brevets**

(11) Veröffentlichungsnummer : **0 008 434**
**B1**

## (12) EUROPÄISCHE PATENTSCHRIFT

(45) Veröffentlichungstag der Patentschrift :
24.11.82

(21) Anmeldenummer : 79102953.1

(22) Anmeldetag : 14.08.79

(51) Int. Cl.³ : **B 29 D 23/04**, B 29 F 3/014

(54) Ramextruder und Verfahren zur Herstellung von Kunststoffrohren in dem Ramextruder.

(30) Priorität : 17.08.78 DE 2836052

(43) Veröffentlichungstag der Anmeldung :
05.03.80 (Patentblatt 80/05)

(45) Bekanntmachung des Hinweises auf die Patenterteilung : 24.11.82 Patentblatt 82/47

(84) Benannte Vertragsstaaten :
BE FR GB IT

(56) Entgegenhaltungen :
CH A 513 716
DE A 2 249 484
US A 3 382 220

(73) Patentinhaber : Ruhrchemie Aktiengesellschaft
Bruchstrasse 219
D-4200 Oberhausen 13 (DE)

(72) Erfinder : Arenhövel, Clemens
Wasserstrasse 24
D-4200 Oberhausen 13 (DE)
Erfinder : Much, Joachim, Dipl.-Ing.
Im Torfveen 2
D-4200 Oberhausen 14 (DE)
Erfinder : Onallah, Ali-Maher, Dipl.-Ing.
Cäcilienstrasse 16
D-4200 Oberhausen 14 (DE)
Erfinder : Schmidt, Volkmar, Dipl.-Ing.
Lützowstrasse 51
D-4200 Oberhausen 13 (DE)

Ramextruder und Verfahren zur Herstellung von Kunststoffrohren in dem Ramextruder

Hochmolekulares Niederdruckpolyethylen (UHMW-PE) mit einem Molekulargewicht von über 500 000 unterscheidet sich grundlegend von den üblichen Polyethylenen durch sein Schmelz- und Viskositätsverhalten. Während bei Polyethylenen bis zu einem Molekulargewicht von 200 000 durch Temperaturerhöhung der Übergang in einer Schmelze mit guten Fließeigenschaften erreicht wird, gehen UHMW-PE durch Temperaturerhöhung lediglich in einen viskos-elastischen Zustand über.

Die hohe Viskosität und die schlechten Fließeigenschaften lassen die Verarbeitung dieses Werkstoffes zu Rohren auf Ein- bzw. Doppelschneckenextruder mit herkömmlichen Rohrwerkzeugen ohne Zerstörung der Materialeigenschaften nicht zu. Da die mechanischen Eigenschaften von UHMW-PE (Festigkeit, Spannungsrißbeständigkeit, hohe Kerbschlagzähigkeit, Gleitverhalten) ideale Voraussetzungen bieten für Rohre, die im pneumatischen und hydraulischen Feststofftransport (Quarz, Sand, Kohlesuspension) eingesetzt werden, schien es notwendig, ein Verfahren zu entwickeln, das eine Verarbeitung dieses Werkstoffes zu Rohren ermöglicht und ihm damit ein neues Anwendungsgebiet eröffnet.

Es ist bekannt, daß man mit Hilfe der Ramextrusion kontinuierlich Platten oder Stangen aus hochmolekularem Niederdruckpolyethylen anfertigen kann (siehe z.B. DE-A-17 29 174 und DE-C-17 78 258).

Die Herstellung von Rohren aus transparenten Kunststoffen ist Gegenstand der US-A-3 382 220. Bei dem verwendeten Material handelt es sich um Polyethylen, das aufgrund des Schmelzindexes, der Dichte und der hohen Kristallinität ein Molekulargewicht von 50 000 bis 100 000 aufweist. Die Extrusion dieses Materials erfolgt mittels verschiedener Extrusionswerkzeuge, die entweder Verengungen oder Erweiterungen aufweisen. Derartige Vorrichtungen sind jedoch für die Extrusion von hochmolekularem Polyethylen mit einem Molgewicht von über 500 000 nicht geeignet.

Rohre aus UHMW-PE mit der erforderlichen Maßhaltigkeit nach DIN 8074 und den typischen Festigkeitseigenschaften des UHMW-PE konnten dagegen bisher nicht hergestellt werden.

Die Herstellung von Polytetrafluorethylenrohren mittels Ramextrusion ist von Steininger und Stamprecht in dem Aufsatz « Extrusionsverarbeitung von Polytetrafluorethylen-Füllstoff-Mischungen » in Kunststoffe 1973, S. 558 ff., beschrieben worden. Der bei der Rohrherstellung entstehende Druck ist dabei ein Vielfaches des Druckes, der zur Erzeugung von Profilen mit Vollquerschnitt benötigt wird. Da die bei der Ramextrusion von UHMW-PE entstehenden Drücke erheblich höher sind als die Drücke, die sich bei der Ramextrusion von Polytetrafluorethylen einstellen, wäre bei der Rohrextrusion von UHMW-PE nach dem genannten Verfahren eine Schädigung der Materialeigenschaften zu erwarten. Auch würde die Extruderkonstruktion infolge des hohen Auslegungsdruckes wirtschaftlich uninteressant werden.

Aufgabe der Erfindung ist es, Rohre aus UHMW-PE bereitzustellen, wobei die typischen Materialeigenschaften des UHMW-PE nicht beeinträchtigt sein sollen. Die Rohrabmessungen sollen den in DIN 8074 enthaltenden Maßtoleranzen entsprechen. Hierzu ist ein Verfahren und eine Vorrichtung zur Ramextrusion von Kunststoffrohren zu entwickeln, wobei hohe Extrusionsdrücke vermieden werden. Die Konstruktion des Ramextruders sollte möglichst einfach und kostengünstig sein.

Die Erfindung besteht in einem Ramextruder zur Herstellung von Kunststoffrohren, bestehend aus einem mit Heizelementen beheizten Werkzeug, einem sich im Werkzeug hin- und herbewegenden Stempel und einem Dorn, der den Rohrinnendurchmesser bestimmt und starr mit dem Stempel verbunden ist, dadurch gekennzeichnet, daß eine auf den Dorn aufgesetzte, den Querschnitt des Werkzeuges ausfüllende Führungsbuchse beim Anfahren aus dem Extruder mittels des sich bildenden Extrudates herausgepreßt wird, um über die gesamte Länge des Werkzeuges einen gleichbleibenden Querschnitt des Extrudates sicherzustellen.

Es zeigte sich, daß der Transport des Kunststoffpulvers sowie dessen Verpressung unter Plastifizierung zum gewünschten Rohr durch gemeinsame Vorwärts- und Rückwärtsbewegung von Dorn und Stempel durchgeführt werden kann, ohne daß es zu Störungen im Ablauf der Ramextrusion kommt. Es ist also weder erforderlich, daß der Dorn dauernd feststeht, noch ist es notwendig, daß der Stempel in Preßstellung gehalten wird, während der Dorn in die Ausgangsstellung zurückgezogen wird, wie es in dem genannten Artikel von Steininger und Stamprech auf S. 559, rechte Spalte, Abschnitt d, für den dort beschriebenen Ramextruder für Polytetrafluorethylen angegeben ist.

Es hat sich gezeigt, daß bei der Ramextrusion von Rohren aus UHMW-PE in dem erfindungsgemäß ausgestalteten Extruder erheblich niedrigere Extrusionsdrücke entstehen als bei der Ramextrusion eines entsprechenden Vollprofils. Neben dem niedrigen entstehenden Extrusionsdruck bringt die starre verbindung von Dorn und Stempel eine erhebliche Vereinfachung des Extruderantriebes mit sich, in dem Stempel und Dorn durch ein einziges Hydraulikaggregat betätigt werden.

Die neue Ramextruderkonstruktion läßt sich nicht nur für die Herstellung von UHMW-PE-Rohren einsetzen, sondern ganz allgemein für die Ramextrusion von Kunststoffrohren, also für alle Kunststoffe, die aufgrund ihrer besonderen Materialeigenschaften ramextrudiert werden, also üblicherweise im Schneckenextruder nicht verarbeitet werden können.

Wegen der verhältnismäßig geringen Drücke, die bei der Extrusion mit dem neuen Ramextruder entstehen, ist dieser besonders für die Herstellung von Rohren aus UHMW-PE geeignet.

Die Länge des Dorns ist üblicherweise gleich der des Werkzeuges von der Einzugszone bis zum Austritt. Der Dorndurchmesser entspricht dem Innendurchmesser des zu extrudierenden Rohres unter Berücksichtigung der Schrumpfmasse. Der Dorn, der auf der einen Seite starr mit dem Stempel verbunden ist, wird üblicherweise auf der Austragsseite des Werkzeuges nicht gelagert, da dies die Herstellung eines gleichmäßigen Rohres beeinträchtigen würde. Es wird daher während des Anfahrvorganges eine den Dorn umhüllende Führungsbuchse ins Werkzeug geschoben, die mit dem Extrudat aus dem Werkzeug herausgetragen wird. Durch diese Anfahrhilfe bleibt der Dorn zentrisch geführt, bis er, vom Extrudat voll umgeben, eine gleichmäßige Wandstärke sicherstellt. Die erreichten Wandstärken liegen im Toleranzbereich für dickwandige Rohre entsprechend DIN 8074.

Um die Unrundheit der extrudierten Rohre so gering wie möglich zu halten, hat es sich als zweckmäßig erwiesen, die Rohre, die beim Abkühlen schrumpfen, einer gezielten Kühlung in einer unmittelbar an die Extrusion anschließenden Strecke, in der das Rohr geführt wird (Kalibrierung), zu unterziehen. Diese Kalibrierung hat üblicherweise die 3- bis 8-fache Länge des Außendurchmessers des hergestellten Rohres und ist entweder zylindrisch oder sich konisch verjüngend (≤ 1 : 50) ausgeführt. Die Kühlung der Kalibrierstrecke erfolgt am besten durch Mantelkühlung mit Wasser bei einer Temperatur von 50 bis 100 °C.

Das Verfahren zur Herstellung von Kunststoff-Rohren mittels des erfindungsgemäßen Ramextruders ist dadurch gekennzeichnet, daß als Kunststoff hochmolekulares Niederdruckpolyethylen mit einem Molekulargewicht von über 500 000 eingesetzt wird.

Das Verfahren ist weiterhin dadurch gekennzeichnet, daß die extrudierten Rohre während der im Anschluß an die Extrusion erfolgende Schrumpfung in der Kalibrierung gekühlt und geführt werden.

Derartig hergestellte Rohre sind insbesondere für die Auskleidung von Stahlrohren zu verwenden. Hierzu wird das UHMW-PE-Rohr in das Stahlrohr eingeführt und seine überstehenden Enden werden umgebördelt. Diese neue Art der Auskleidung von Stahlrohren ist wesentlich einfacher als die herkömmliche Rohrauskleidung mit Platten aus UHMW-PE, wie sie z.B. in der DE-B-24 19 898 beschrieben ist. Durch die fugenlose Auskleidung wird verhindert, daß in den Rohren transportiertes Fördergut zwischen Stahlrohr und UHMW-PE-Auskleidung kriechen kann. Das ist bei der Förderung von Medien, die das Stahlrohr angreifen können, besonders wichtig.

Bei den in dieser Weise ausgekleideten Rohren lassen sich die hohe mechanische Festigkeit von Stahl und die hohe Abriebfestigkeit sowie die geringe Wärmeleitfähigkeit des UHMW-PE optimal kombinieren.

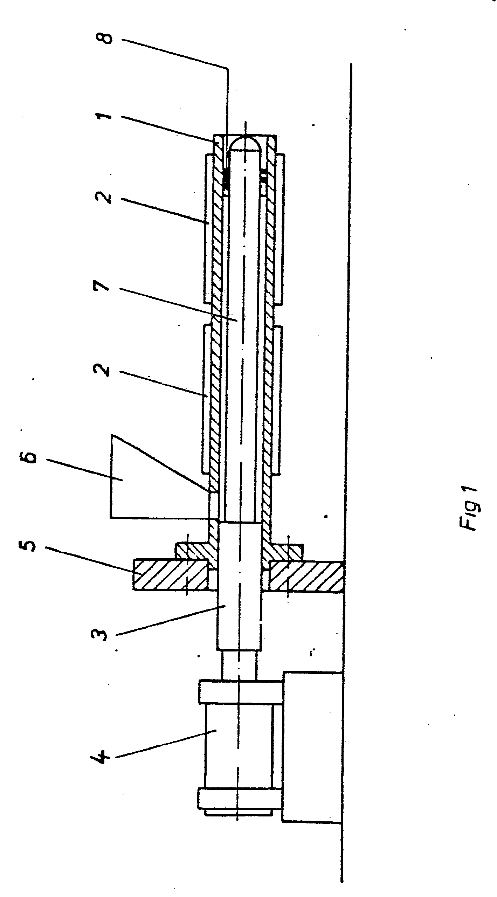

In der Zeichnung Fig. 1 ist ein Ramextruder entsprechend der Erfindung dargestellt. Er besteht aus einem Werkzeug 1, das von Heizelementen 2 umgeben ist und von der Halteplatte 5 getragen wird. Der Aufgabetrichter 6 dient zur Zufuhr des zu extrudierenden Kunststoffpulvers. Der Stempel 3, der sich im Werkzeug hin- und herbewegt, wird durch das Hydraulikaggregat 4 angetrieben. Er bewirkt den Transport und die Verdichtung des Kunststoffpulvers. An dem Stempel 3 ist der Dorn 7, der den Innendurchmesser des extrudierten Rohres bestimmt, starr befestigt. Die Führungsbuchse 8 dient zur lagerung des Dorns beim Anfahren des Ramextruders.

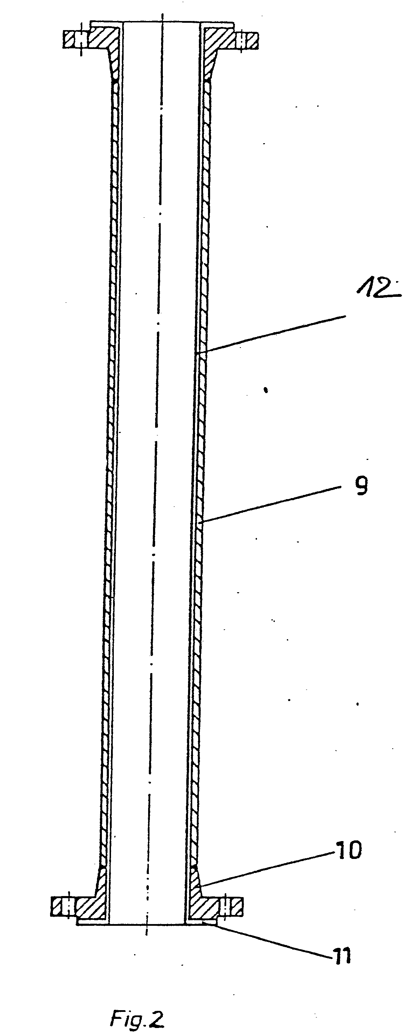

Fig. 2 zeigt ein mit einem Rohr aus UHMW-PE 12 ausgekleidetes Stahlrohr 9. Das UHMW-PE-Rohr ist an den Flanschen 10 des Stahlrohres bei 11 umgebördelt.

Beispiel 1

Das Verfahren wurde mit einem Werkzeug, das eine Länge von 937 mm und einen Innendurchmesser von 83 mm hat, durchgeführt. Die Werkzeugbeheizung erfolgte über zwei elektrische Heizbänder von je 350 mm Länge mit einer Gesamtleistung von 3 KW, die über zwei Temperaturregler gesteuert werden. Das gewählte Temperaturprofil liegt in der eintragsseitigen Heizzone bei 220 °C und in der austragsseitigen Heizzone bei 160 °C. Bei Durchführung des Verfahrens ohne Verwendung einer Kalibrierung stellte sich bei einem Ausstoß von 3,9 kg UHMW-PE/h im Extruder ein maximaler Druck von 152 bar ein.

Bei Verwendung einer Kalibrierung ergab sich bei gleichem Durchsatz ein Druck von 208 bar. Das extrudierte Rohr hatte die Abmessungen von 100 × 10 mm. Die physikalischen Eigenschaften des UHMW-PE wurden beim Extruder nicht beeinträchtigt.

Beispiel 2

Bei ansonsten gleichen Versuchsbedingungen wie in Beispiel 1 wurde mit einem Dorn mit einem Durchmesser von 95 mm gearbeitet. Bei Durchführung des Verfahrens ohne Kalibrierung stellte sich bei einem Ausstoß von 7,3 kg UHMW-PE/h im Extruder ein maximaler Druck von 223 bar ein. Bei Verwendung einer Kalibrierung ergab sich beim gleichen Durchsatz ein Druck von 371 bar.

**Ansprüche**

1. Ramextruder zur Herstellung von Kunststoff-Rohren bestehend aus einem mit Heizelementen (2) beheizten Werkzeug (1), einem sich im Werkzeug hin- und herbewegenden Stempel (3) und einem Dorn (7), der den Rohrinnenmesser bestimmt und starr mit dem Stempel (3) verbunden ist, dadurch gekennzeichnet, daß eine auf den Dorn (7) aufgesetzte, den Querschnitt des Werkzeuges (1) ausfüllende Führungsbuchse (8) beim Anfahren aus dem Ramextruder mittels des sich bildenden Extrudates herausgepreßt wird, um über die gesamte Länge des Werkzeuges einen gleichbleibenden Querschnitt des Extrudates sicherzustellen.

2. Ramextruder nach Anspruch 1, gekennzeichnet durch eine sich an das Werkzeug (1) anschließende Kalibrierung mit Kühlmantel.

3. Verfahren zur Herstellung von Kunststoff-Rohren in einem Ramextruder nach Anspruch 1, dadurch gekennzeichnet, daß als Kunststoff hochmolekulares Niederdruckpolyethylen mit einem Molekulargewicht von über 500 000 eingesetzt wird.

4. Verfahren nach Anspruch 3, dadurch gekennzeichnet, daß die extrudierten Rohre während der im Anschluß an die Extrusion erfolgenden Schrumpfung in der Kalibrierung nach Anspruch 2 gekühlt und geführt werden.

**Claims**

1. Ram extruder for the production of plastic pipes consisting of an extrusion die (1) heated by means of heating elements (2), a ram (3) which is able to move backwards and forwards within the die and a mandrel (7) which determines the inside diameter of the pipe and is rigidly connected with the ram (3), characterized in that upon starting up a guide bush (8) mounted on the mandrel (7) and filling the cross-section of the die (1) is pressed out of the ram extruder by means of the extrudate being formed in order to guarantee a constant cross-section of the extrudate over the total length of the die.

2. Ram extruder according to claim 1, characterized by a former with cooling jacket arranged directly downstream of the extrusion die.

3. Process for the production of plastic pipes in a ram extruder according to claim 1, characterized in that high molecular weight low pressure polyethylene having a molecular weight of more than 500,000 is employed as the plastic.

4. Process according to claim 3, characterized in that the extruded pipe is cooled and guided in the former according to claim 2 during the contraction taking place subsequent to the extrusion.

**Revendications**

1. Extrudeuse à piston pour la fabrication de tubes en matière plastique, composée d'un outil (1) chauffé par des éléments chauffants (2), d'un piston (3) qui se déplace en va-et-vient dans l'outil et d'un mandrin (7) qui détermine le diamètre intérieur du tube et est relié rigidement au piston (3), caractérisée en ce qu'une douille de guidage (8) montée sur le mandrin (7) et qui remplit la section de l'outil (1) est expulsée de l'extrudeuse à piston au moyen de l'extrudat qui se forme au moment de la mise en marche, pour garantir sur toute la longueur de l'outil une section constante de l'extrudat.

2. Extrudeuse à piston suivant la revendication 1, caractérisée par un calibrage muni d'une double paroi de refroidissement, qui fait suite à l'outil (1).

3. Procédé de fabrication de tubes en matière plastique dans une extrudeuse à piston suivant la revendication 1, caractérisé en ce qu'on utilise comme matière plastique un polyéthylène basse pression à haut poids moléculaire d'un poids moléculaire de plus de 500 000.

4. Procédé suivant la revendication 3, caractérisé en ce que les tubes extrudés sont refroidis et guidés dans le calibrage suivant la revendication 2, pendant le retrait qui se produit à la suite de l'extrusion.

Fig 1

Fig.2